# EUROPÄISCHE PATENTSCHRIFT

(11) **EP 1 665 447 B1**
(45) Veröffentlichungstag und Bekanntmachung des Hinweises auf die Patenterteilung: **12.04.2017**
(21) Anmeldenummer: 04786822.9
(22) Anmeldetag: 21.09.2004
(51) Int. Cl.: H01M 2/14, H01M 2/16, H01M 4/13, H01M 4/139, H01M 4/587, H01M 10/0525, H01M 10/0563, H01M 10/058, H01M 10/0585, H01M 4/525, H01M 4/62, H01M 10/054

(54) **ELEKTROCHEMISCHE BATTERIEZELLE**
ELECTROCHEMICAL BATTERY CELL
ELEMENT DE BATTERIE ELECTROCHIMIQUE

(30) Priorität: 23.09.2003 DE 10343862
(43) Veröffentlichungstag der Anmeldung: 07.06.2006
(60) Teilanmeldung: 10009874.8
(73) Patentinhaber: Alevo International S.A., 1920 Martigny (CH)
(72) Erfinder: HAMBITZER, Günther, 76327 Pfinztal (DE); ZINCK, Laurent, 67470 Mothern (FR); BIOLLAZ, Heide, 77694 Kehl (DE); BORCK, Markus, 70372 Stuttgart (DE); RIPP, Christiane, 76327 Pfinztal (DE)
(74) Vertreter: Durm & Partner
(86) Internationale Anmeldenummer: PCT/DE2004/002105
(87) Internationale Veröffentlichungsnummer: WO 2005/031908

(56) Entgegenhaltungen:
- EP-A- 0 468 942
- EP-A- 0 767 506
- WO-A-00/44061
- WO-A-00/79631
- WO-A-02/09213
- WO-A-03/077328
- DE-A1- 10 110 716
- DE-C1- 19 911 800
- US-A- 4 567 031
- US-A- 5 006 428
- US-A- 5 595 837
- US-A1- 2003 049 524
- PATENT ABSTRACTS OF JAPAN Bd. 008, Nr. 285 (E-287), 26. Dezember 1984 (1984-12-26) & JP 59 149654 A (KAO SEKKEN KK), 27. August 1984 (1984-08-27)

## Beschreibung

Die Erfindung betrifft ein Verfahren zum Herstellen einer elektrochemischen Batteriezelle mit einer negativen Elektrode (Kathode), einem ein Leitsalz enthaltenden Elektrolyt und einer positiven Elektrode (Anode). Insbesondere richtet sich die Erfindung auf Alkalimetallzellen, bei denen die aktive Masse ein Alkalimetall ist, das beim Laden der Zelle in und/oder an der negativen Elektrode gespeichert wird. Die aktive Masse kann jedoch auch ein anderes Metall, insbesondere ein Erdalkalimetall oder ein Metall der zweiten Gruppe des Periodensystems sein. Das Leitsalz des Elektrolyten besteht aus Kationen des Metalls, das die aktive Masse bildet und geeigneten Anionen. Im Falle von Alkalimetallzellen wird als Leitsalz vorzugsweise ein Tetrahalogenoaluminat des Alkalimetalls, beispielweise LiAlCl₄, verwendet.

Nachfolgend wird beispielhaft überwiegend auf Alkalimetallzellen, insbesondere Lithiumzellen Bezug genommen. Dies darf jedoch nicht als Einschränkung der allgemeinen Anwendbarkeit der Erfindung verstanden werden.

Typisch für derartige Zellen ist ein Aufbau aus mehreren übereinander angeordneten Schichten, deren Flächenabmessungen sehr viel größer als ihre Dicke ist. Sie haben etwa gleich große Flächenabmessungen und sind in der Zelle sandwichartig übereinander angeordnet. Gebräuchlich sind prismatische Zellen mit in der Regel quaderförmigem Gehäuse und geraden Schichten sowie zylindrische Zellen, in deren Innerem die Schichten rollenförmig gewickelt sind.

Übliche Zellen haben mindestens drei Schichten, nämlich die negative Elektrode, die positive Elektrode und einen Separator, der beide Elektroden elektrisch und mechanisch trennt. Er hat schwierige Aufgaben zu erfüllen:
- Er soll die elektrische Trennung von positiver und negativer Elektrode sichern, ohne die der Betrieb einer Batteriezelle nicht möglich ist.
- Er soll dazu beitragen, eine gleichmäßige Verteilung des flüssigen Elektrolyten zwischen den Elektroden sicherzustellen.
- Er soll eine mechanische Trennung des Anoden- und des Kathodenraums gewährleisten, andererseits aber sowohl den erforderlichen Elektrolyttransport als auch einen Gastransport zwischen den beiden Teilräumen der Zelle gewährleisten.
- Er soll Kurzschlüsse zwischen den Elektroden zuverlässig verhindern. Ein besonderes Problem ergibt sich dabei, wenn beim Laden der Zelle das aktive Metall auf deren Oberfläche abgeschieden wird.

Das zuletzt genannte Problem ist besonders kritisch, wenn die aktive Masse, insbesondere nach mehreren Lade- und Entladezyklen, nicht als glatte Schicht mit einer ebenen Oberfläche abgeschieden wird, sondern als abschnittsweise fadenförmige Gebilde. Speziell im Fall von Alkalimetallzellen, insbesondere Lithiumzellen, werden beim Laden der Zelle unverzweigte Fäden mit (für eine bestimmte Zelle mit einem bestimmten Elektrolyten) im wesentlichen gleichem Durchmesser gebildet, die zu Knäueln durcheinanderwachsen und als Whisker bezeichnet werden. Die Bildung der Whisker wird darauf zurückgeführt, dass sich an der Oberfläche des reaktiven aktiven Metalls infolge einer Selbstentladereaktion eine dünne Deckschicht bildet, die nicht vollständig gleichmäßig ist. Deswegen wächst das elektrolytisch abgeschiedene aktive Metall bevorzugt an den dünneren Stellen durch die Deckschicht durch und dann jeweils am Ende des Fadens weiter.

Durch die Bildung solcher fadenförmiger Gebilde wird der Separator mechanisch stark belastet. Andererseits ist die Auswahl geeigneter Materialien durch weitere Anforderungen beschränkt:
- Das Separatormaterial muss in der Zelle inert sein;
- es muss möglichst dünn sein, um eine hohe Energiedichte zu ermöglichen;
- die Leistungsdaten der Zelle und ihre Lebensdauer werden u.a. durch die Durchlässigkeit des Separators für die Elektrolytionen mitbestimmt;
- die Kosten des Separators müssen vertretbar sein.

Besonders wichtig ist ein perfekt funktionierender Separator in Lithium-Ionen-Zellen und Lithium-Polymer-Zellen. Wenn dort Lithium metallisch auf der Oberfläche der negativen Elektrode abgeschieden wird, darf das hochreaktive Metall keinesfalls in Kontakt mit der positiven Elektrode kommen, weil der aus einem solchen Kontakt resultierende Kurzschluß sofort zu einer unkontrollierten Reaktionsfolge führen würde, die als "thermal runaway" bezeichnet wird. Die organische Elektrolytlösung solcher Zellen würde unkontrolliert abbrennen oder sogar explodieren. Wegen dieser Risiken werden die genannten Zelltypen in der Regel nur in relativ kleinen Bauformen hergestellt. Außerdem werden zusätzliche, vor allem elektronische, Sicherheitsmaßnahmen ergriffen.

Bei den genannten Zelltypen ist die negative Elektrode üblicherweise als sogenannte "Insertionselektrode" ausgebildet. Dieser Begriff bezeichnet generell Elektroden, die das aktive Metall derartig in ihrem Inneren enthalten, dass es zum Austausch mit dem Elektrolyt beim Laden und Entladen der Zelle bereit ist. Bei Lithium-Ionen- und Lithium-Polymer- Zellen ist die negative Elektrode eine Insertionselektrode auf Basis von Graphit, in deren Inneres beim Laden der Zelle Metallionen des Leitsalzes aufgenommen werden. Die Zelle soll nach Möglichkeit so betrieben werden, dass Betriebszustände vermieden werden, bei denen aktives Metall an der Oberfläche der Elektrode abgeschieden wird. Dies ist in der Praxis jedoch nur mit aufwendigen elektronischen Maßnahmen zu erreichen, durch die ein Überladen der Zelle sowie ein Laden mit relativ hohen (über einem für die jeweilige Zelle gültigen Grenzwert liegenden) Stromstärken zuverlässig vermieden wird. Die Elektronik muss extrem genau (Abschaltspannung beispielsweise 4,2 V ± 0,01 V) und extrem zuverlässig (höchstens ein Fehler auf 100 Millionen Stück) sein. Durch derartige Maßnahmen werden die Kosten wesentlich erhöht. Dennoch verbleiben gewisse Risiken.

Auf dieser Grundlage liegt der vorliegenden Erfindung die Aufgabe zugrunde, eine wiederaufladbare elektrochemische Batteriezelle, insbesondere Alkalimetallzelle und vor allem Lithiumzelle mit verbesserten elektrischen Eigenschaften zur Verfügung zu stellen.

Die erfindungsgemäße Lösung betrifft ein Herstellungsverfahren für eine elektrochemische Batteriezelle, insbesondere einen innerhalb eines solchen Verfahrens stattfindenden Reinigungsschritt, bei dem eine Elektrode der Zelle dadurch für ihre Funktion optimiert wird, dass an der Elektrode gebundene OH⁻-Ionen entfernt werden. Dabei wird ein Reinigungsmittel, das eine mit OH⁻-Ionen reagierende erste Reinigungskomponente enthält, derartig mit der Elektrode in Kontakt gebracht, dass an ihr gebundene OH⁻-Ionen durch Reaktion mit der ersten Reinigungskomponente von der Elektrodenoberfläche gelöst werden, und Bestandteile des Reinigungsmittels oder Reaktionsprodukte, die die Funktion der Zelle stören könnten, werden von der Elektrode entfernt.

Für die Funktion von wasserfreien Batteriezellen, also insbesondere auch Zellen, die mit einem auf SO₂ basierenden Elektrolyten arbeiten, ist es sehr wichtig, dass in der Elektrodenstruktur vorhandene Wasserreste (sowohl molekulares Wasser als auch H⁺- und OH⁻-Ionen) vollständig entfernt werden. Dies stellt insbesondere bei Verwendung der zuvor erläuterten Insertionselektroden ein schwerwiegendes Problem dar.

Als "auf SO₂ basierend" (SO₂ based) werden Elektrolyten bezeichnet, die SO₂ nicht nur als Zusatz in geringer Konzentration enthalten, sondern bei denen die Beweglichkeit der Ionen des Leitsalzes, das in dem Elektrolyten enthalten ist und den Ladungstransport bewirkt, zumindest teilweise durch das SO₂ gewährleistet wird. Weitere Informationen hierzu können der WO 00/79631 und den darin zitierten Dokumenten entnommen werden.

Im Rahmen der Erfindung wurde festgestellt, dass die Gegenwart von chemisch gebundenem Wasser zu einer Passivierung der Elektroden führen kann, so dass die Elektrodenprozesse nur gehemmt ablaufen. Im Falle einer Insertionselektrode, insbesondere einer Alkalimetall-Interkalationselektrode (z.B. des weiter oben erwähnten aus der WO 00/79631 bekannten Typs metalloxidischer Interkalationsverbindungen) betrifft dies die Auslagerung des Alkalimetalls beim Laden der Zelle bzw. die Einlagerung beim Entladen. Die Passivierung führt zu einer Erhöhung des Innenwiderstandes der Zelle.

Nach den Feststellungen der Erfinder läßt sich die Passivierung darauf zurückführen, dass eine Reaktion der Oberflächenmoleküle der Elektrode mit Wasser (z.B. aus Luftfeuchtigkeit) zur Bildung einer Deckschicht führt, die ein Hydroxid des aktiven Metalls, im Falle eines Alkalimetalls A also eine Verbindung des Typs AOH, enthält. Selbst geringe Spuren von Wasser führen zur Ausbildung einer Hydroxid-Deckschicht. Nach dem Kenntnisstand der Erfinder kann die Bildung einer Deckschicht schon beim Herstellen von Elektroden, deren aktive Masse auf einer metalloxidischen Interkalationsverbindung, insbesondere LiCoO₂, basiert, kaum vermieden werden. Dies bezieht sich nicht nur auf die äußere Oberfläche der Elektrode, sondern (im gebräuchlichen Fall eines porösen Elektrodenmaterials) auch auf deren innere Oberfläche (in den Poren). Die Passivierung der Elektrode läßt sich durch Reaktion mit der Reinigungskomponente, die mit OH⁻-Ionen reagiert und hier als erste Reinigungskomponente bezeichnet wird, beseitigen. Die erste Reinigungskomponente wird ohne Beschränkung der Allgemeinheit nachfolgend auch als Aktivierungskomponente bezeichnet.

Gegenstand der Erfindung ist auch eine elektrochemische Batteriezelle nach Anspruch 8 mit einem auf SO₂ basierenden Elektrolyten und einer Insertionselektrode, insbesondere eine Interkalationselektrode, deren Oberfläche im wesentlichen frei von OH⁻-Ionen ist. Vorzugsweise ist die Elektrode auch im wesentlichen frei von H⁺-Ionen. Dabei ist "im wesentlichen frei von OH⁻-Ionen bzw. H⁺-Ionen" dahingehend zu verstehen, dass die mit dem Vorhandensein der Ionen verbundene Passivierung der Elektrode bzw. der resultierende Kapazitätsverlust nicht in einem solchen Ausmaß vorhanden ist, dass die praktische Funktion der Elektrode in einer Batteriezelle beeinträchtigt wird. Wie weiter unten noch näher erläutert wird, führt die Passivierung zu einer kontinuierlichen Erhöhung des Innenwiderstandes der Zelle während der Lade- und Entladezyklen. Die diesbezüglichen Eigenschaften der Elektrode lassen sich beispielsweise mittels zyklischer Voltamogramme beobachten, wie ebenfalls weiter unten noch näher erläutert wird. Bevorzugt wird die Freiheit der Oberfläche der aktiven Masse von Hydroxid-Ionen durch das vorstehend beschriebene Verfahren mittels der ersten Reinigungskomponente erreicht.

Für den speziellen Fall einer Lithium enthaltenden Kathode mit einem hohen Anteil an Nickel wird in der EP 0488942 A2 ein Herstellungsverfahren beschrieben, mit dem ein Elektrodenmaterial erzeugt werden soll, das im Wesentlichen frei von LiOH und Li₂CO₃ ist. Um dies zu erreichen, wird eine Mischung der Ausgangssubstanzen unter anderem einer Hitzebehandlung bei einer Temperatur von etwa 600°C in einer speziellen Gasathmosphäre unterworfen und das verbleibende LiOH und Li₂CO₃ durch Extraktion mit Wasser und anschließendes Trocknen oder durch Gefriertrocknen weiter reduziert. Die weitgehende Freiheit von LiOH und Li₂CO₃ wird in diesem Dokument vor allem im Hinblick auf eine Explosionsgefahr angestrebt, die daraus resultieren kann, dass sich LiOH und Li₂CO₃ beim Betrieb der Zelle elektrochemisch zersetzen können, wobei gasförmige Produkte entstehen und der daraus resultierende Druck zu der Explosionsgefahr führt.

Im Rahmen der Erfindung wurde festgestellt, dass Insertionselektroden der hier diskutierten Art einen Gehalt an chemisch gebundenem Wasser in der Größenordnung von 10000 ppm (d.h. 1 Gew% H₂O bezogen auf die elektrochemisch aktive Elektrodenmasse, insbesondere LiCoO₂) haben. Eine erfindungsgemäße optimierte Elektrode hat einen Wassergehalt von höchstens 5000 ppm, bevorzugt höchstens 1000 ppm, besonders bevorzugt höchstens 100 ppm und ganz besonders bevorzugt höchstens 10 ppm.

Als besonders geeignete erste Reinigungskomponente hat sich eine protonenfreie Lewis-Säure erwiesen. Mit diesem Begriff wird eine Substanz bezeichnet, die Säureeigenschaften im Sinne der von G.N. Lewis gegebenen Definition hat (also ein Elektronenakzeptor ist), jedoch kein H⁺-Ion enthält. Bevorzugte Beispiele von Lewis-Säuren sind AlF₃, BF₃, CO₂, CS₂ und GaCl₃. Generell läßt sich die Eignung einer Lewis-Säure für die Zwecke der Erfindung experimentell erproben.

Eine Vorauswahl geeigneter Lewis-Säuren kann aufgrund deren Stärke erfolgen, die wiederum von der Differenz der Elektronegativitätswerte der die Säure bildenden Atome (beispielsweise Al und F im Fall von AlF₃) abgeschätzt werden kann. Je größer diese Differenz ist, desto stärker ist die Lewis-Säure.

Das Reinigungsmittel ist in der Regel eine Flüssigkeit, die die erste Komponente in einem geeigneten Lösungsmittel enthält. Als Lösungsmittel sind insbesondere aprotische Flüssigkeiten, beispielsweise Tetrachlorkohlenstoff (CCl₄) geeignet. Die erforderliche Wasserfreiheit des Lösungsmittels kann beispielsweise mittels eines Molsiebs, insbesondere auf der Basis von Metallaluminosilikat mit großer Oberfläche, erreicht werden. Grundsätzlich kann als Lösungsmittel auch ein Gas oder überkritisches Fluid, insbesondere auf der Grundlage von überkritischem CO₂, verwendet werden. Die Reinigungskomponente kann auch selbst als Fluid (z.B. überkritisches CO₂) oder Gas (z.B. CS₂) vorliegen. In solchen Fällen muss das Reinigungsmittel selbstverständlich kein zusätzliches Lösungsmittel enthalten.

Die Konzentration der Aktivierungskomponente in dem Reinigungsmittel sollte möglichst hoch sein, wobei im Falle einer Lösung eine Obergrenze aus der Löslichkeit der Aktivierungskomponente resultiert. In der Regel ist eine gesättigte Lösung bevorzugt. Grundsätzlich ist eine Aktiverungswirkung jedoch auch schon bei geringeren Konzentrationen möglich. Die geeignete Konzentration muss im Einzelfall in Verbindung mit der Dauer der Reinigungsbehandlung experimentell bestimmt werden und hängt selbstverständlich auch von der verwendeten Lewis-Säure ab.

Das Reinigungsmittel muss in der Praxis folgende Bedingungen erfüllen:
- Sofern das Verfahren derartig angelegt ist, dass mindestens ein Teil des Reinigungsmittels bei der Herstellung der Zelle in der Insertionselektrode verbleibt, muss das Reinigungsmittel insoweit für die Funktion der Zelle unschädlich sein. Schädliche Bestandteile müssen sich leicht und vollständig entfernen lassen.
- Das Reinigungsmittel muss mit dem Elektrodenmaterial verträglich sein. Insbesondere darf es keine dessen Funktion störende Reaktion verursachen.

Gemäß einer bevorzugten Ausführungsform wird zur Optimierung von Insertionselektroden in dem Herstellungsverfahren eine zweite Reinigungskomponente verwendet, die mit H⁺-Ionen reagiert und in einem Reinigungsmittel derartig mit der Insertionselektrode in Kontakt gebracht wird, dass in ihr gebundene H⁺-Ionen durch Reaktion mit der zweiten Reinigungskomponente aus dem Inneren der Elektrode gelöst werden. Im Rahmen der Erfindung wurde festgestellt, dass die Eigenschaften von Insertionselektroden, insbesondere Interkalationselektroden der weiter oben erläuterten Art, auch dadurch beeinträchtigt werden, dass H⁺-Ionen (Protonen) an das Elektrodenmaterial binden. Die Protonen tauschen mit den Alkalimetallionen der Insertionselektrode aus, reduzieren dadurch deren Aufnahmefähigkeit für aktives Metall (insbesondere Alkalimetall) und damit die elektrische Kapazität der Zelle. Mittels der zweiten Reinigungskomponente werden die Protonen aus der Insertionselektrode extrahiert. Dadurch wird ihre Aufnahmekapazität und damit auch die elektrische Speicherkapazität der Zelle verbessert.

Als zweite Reinigungskomponente eignet sich insbesondere ein Salz, das mit den in der Insertionselektrode gebundenen Protonen eine Ionenaustauschreaktion eingeht. Geeignete Beispiele sind Halogenide, insbesondere Fluoride eines Alkalimetalls, Erdalkalimetalls oder eines Metalls der dritten Hauptgruppe des Periodensystems. Ohne Beschränkung der Allgemeinheit wird nachfolgend für die zweite Reinigungskomponente auch die Bezeichnung "Reinigungssalz" verwendet.

Hinsichtlich beider Reinigungskomponenten und deren Verwendung in dem Herstellungsverfahren sind verschiedene Varianten möglich. Beispielsweise kann mindestens eine Teilmenge des Reinigungssalzes schon bei der Herstellung der Elektrodenmasse in diese und damit in die Elektrode eingebracht werden. Es kann auch mit einer Verfahrensführung gearbeitet werden, bei der die erste und/oder die zweite Reinigungskomponente nicht unmittelbar in das Reinigungsmittel eingebracht wird. Vielmehr besteht selbstverständlich auch die Möglichkeit, dass diese Komponenten in situ mittels geeigneter Vorreaktionen gebildet werden. Beispielhaft genannt seien Salze, die ein Reinigungssalz dadurch bilden können, dass sie Halogenide, bevorzugt Fluoride abspalten, insbesondere Salze der Anionen PF₆⁻, AsF₆⁻, BF₄⁻ und AlF₄⁻. Auch organische Salze können sich als Ausgangsprodukte zur in situ-Bildung eines Reinigungssalzes eignen.

Gemäß einer bevorzugten Ausgestaltung dieses Herstellungsverfahrens erfolgt die Entfernung der OH⁻ und H⁺-Ionen zweistufig in zwei getrennten Schritten, bei denen jeweils ein getrenntes (vorzugsweise auch unterschiedliches) Lösungsmittel eingesetzt wird.

Insbesondere kann in einer ersten Stufe die Insertionselektrode mit einem Reinigungsmittel kontaktiert werden, das eine protonenfreie Lewis-Säure in einem leicht flüchtigen aprotischen Lösungsmittel, beispielsweise CCl₄ enthält. Dieses Reinigungsmittel wird so lange einwirken gelassen, bis die OH⁻-Ionen von der Elektrode in das Reinigungsmittel übergegangen sind. Danach wird es entfernt.

In einer zweiten Stufe wird die Elektrode mit einem zweiten Reinigungsmittel in Kontakt gebracht, das die zweite Reinigungskomponente enthält. Nach Ablauf der für den Übergang der Protonen aus der Elektrode in das Reinigungmsittel erforderlichen Reaktion kann auch das zweite Reinigungsmittel wieder entfernt werden. Die resultierende optimierte Elektrode muss selbstverständlich in wasserfreier Atmosphäre weiterverarbeitet werden, damit ihre Eigenschaften nicht erneut durch Aufnahme von Wasser und dessen Bestandteilen OH⁻ und H⁺ verschlechtert werden.

Grundsätzlich kann als Lösungsmittel einer Reinigungsflüssigkeit auch der für die jeweilige Zelle vorgesehene Elektrolyt verwendet werden. Insbesondere kann es zweckmäßig sein, ein geeignetes Reinigungssalz zusammen mit dem Elektrolyt in die Zelle einzubringen. Da die durch Ionenaustausch mit den in der Insertionselektrode enthaltenen Protonen gebildeten Verbindungen, beispielsweise HF und HCl, flüchtig sind, entweichen sie von selbst, wobei man dies durch Anwendung von Unterdruck (Evakuieren) beschleunigen kann. In einem solchen Fall muss die Reinigungsflüssigkeit nicht aus der Zelle entfernt werden, sondern bleibt darin als Elektrolyt, wobei verbliebene Reste des Reinigungssalzes weitere positive Wirkungen (neben der Extraktion der H⁺-Ionen aus der Elektrode) haben.

Die Behandlung der Elektroden mit den Reinigungsmitteln kann grundsätzlich sowohl innerhalb als auch außerhalb der Zelle erfolgen. Im Falle des zweistufigen Verfahrens kann es insbesondere zweckmäßig sein, die erste Verfahrensstufe (Entfernen der OH⁻-Ionen) außerhalb der Zelle durchzuführen, danach die teilweise optimierte Elektrode in die Zelle einzubauen und die zweite Reinigungsstufe (Extraktion der H⁺-Ionen) in der Zelle durchzuführen.

Das erfindungsgemäße Verfahren und die erfindungsgemäße Elektrode eignen sich insbesondere für eine elektrochemische Batteriezelle mit einer negativen Elektrode, einem ein Leitsalz enthaltenden Elektrolyt und einer positiven Elektrode, bei welcher der Elektrolyt auf SO₂ basiert und der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlußreaktionen stattfinden.

Im Rahmen der Erfindung wurde experimentell festgestellt, dass in Batteriezellen, deren Elektrolyt auf SO₂ basiert, ein völlig unerwartetes Kurzschlußverhalten zu beobachten ist, wenn aktives Metall, das an der Oberfläche der negativen Elektrode abgeschieden wird, in Kontakt zu der positiven Elektrode kommt. Wenn man durch geeignete Maßnahmen dafür sorgt, dass derartige Kurzschlüsse lokal begrenzt sind, führen die dabei auftretenden Reaktionen weder zu einem "thermal runaway" noch laufen irreversible Reaktionen ab, durch die ein Teil des aktiven Metalls passiviert und dadurch die Ladekapazität der Zelle vermindert wird. Vielmehr wurde experimentell festgestellt, dass durch derartige lokal begrenzte Kurzschlüsse und die damit verbundenen Reaktionen die Eigenschaften der Zelle in keiner Weise negativ beeinflußt werden. Die erfindungsgemäße Zelle arbeitet demzufolge ohne Separator. Stattdessen ist sie so ausgebildet, dass lokale Kontakte von beim Laden der Zelle auf der negativen Elektrode abgeschiedener aktiver Masse mit der positiven Elektrode gezielt zugelassen wird. Dies stellt eine grundlegende Abkehr von bisher üblichen Zellkonstruktionen dar.

Nach den Experimenten, die der Erfindung zugrunde liegen, führen die lokalen Kurzschlüsse und die damit verbundene Erwärmung des Elektrolyten zur Bildung von Verbindungen des aktiven Metalls mit dem SO₂, im Falle einer Lithiumzelle zur Bildung von Lithiumdithionit (Li₂S₂O₄). Obwohl diese Verbindung relativ schwer löslich ist, wird keines der bei der Reaktion verbrauchten Ausgangsprodukte (Li und SO₂) dauerhaft der Zellfunktion entzogen, weil der Bildung des Dithionits eine Auflösungsreaktion gegenübersteht, die hinreichend schnell ist, um zu einem für die Zellfunktion vorteilhaften Gleichgewicht zu kommen. Auch hierzu kann Näheres der WO 00/79631 entnommen werden.

Daneben kann im Bereich der lokalen Kurzschlüsse eine Reaktion mit der positiven Elektrode stattfinden. Dies gilt insbesondere für Zellen, bei denen die positive Elektrode ein Metalloxid, insbesondere ein Oxid eines Übergangsmetalls der Ordnungszahl 22 bis 28 enthält. Das Oxid liegt bevorzugt als Interkalationsverbindung aus dem aktiven Metall, einem der genannten Übergangsmetalle und Sauerstoff vor. Unter den genannten Metallen sind Kobalt, Nickel und Eisen besonders bevorzugt. Praktische Bedeutung haben insbesondere auch binäre und ternäre metalloxidische Interkalationsverbindungen, die zwei oder drei unterschiedliche Übergangsmetalle in der Gitterstruktur enthalten. Auch hinsichtlich dieser bei der vorliegenden Erfindung besonders bevorzugten Elektrodenmaterialien kann ergänzend auf die WO 00/79631 sowie auf das dort zitierte US-Patent 4,567,031 verwiesen werden. Beispielsweise bei Verwendung einer positiven Elektrode auf Basis von Kobaltoxid findet nach den Erkenntnissen der Erfinder infolge der lokalen Kurzschlüsse folgende Reaktion statt:

CoO₂+Li→LiCoO₂

Diese Reaktion entspricht der Einlagerung des aktiven Metalls während des Entladens der Zelle.

Metallisches Lithium wird vor allem bei zwei Betriebszuständen an der negativen Elektrode derartig abgeschieden, dass es, wenn kein Separator vorhanden ist, die positive Elektrode kontaktieren kann, nämlich beim Laden mit besonders hohen Stromstärken oder beim Überladen, d.h. wenn die beim Laden zugeführte elektrische Ladungsmenge die Kapazität der negativen Elektrode übersteigt. In diesen Betriebszuständen ist eine Kurzschlußreaktion, die dem Entladen der Zelle entspricht, nicht nur nicht nachteilig, sondern sogar vorteilhaft. Die lokalen Kurzschlüsse wirken sich demzufolge sogar vorteilhaft aus und können als "benefitial shortcuts" bezeichnet werden.

Insgesamt wurde im Rahmen der experimentellen Erprobung der Erfindung festgestellt, dass mit der separatorlosen Zelle sehr gute Ergebnisse sowohl hinsichtlich der Sicherheit, als auch hinsichtlich der Zelldaten (Zykelstabilität, Kapazität etc.) erreicht werden.

Unter anderem werden folgende Vorteile erreicht:
- Der Innenwiderstand der Zelle wird verringert, weil der sehr feinporige und zum Verstopfen der Poren neigende Separator entfällt.
- Die Sicherheit wird wesentlich erhöht, weil die Risiken, die mit einer Beschädigung des Separators bei konventionellen Zellen verbunden sind, entfallen.
- Die Kosten werden reduziert, weil die gebräuchlichen Separatormaterialien einen erheblichen Kostenfaktor darstellen.
- Gewicht und Volumen der Zelle werden reduziert, so dass eine erhöhte Energie- und Leistungsdichte erreicht werden kann.
- Die Zelle kann mit hohen Stromstärken und deswegen schnell geladen werden, weil die mit der Abscheidung von aktivem Metall an der Zelloberfläche verbundenen Risiken beseitigt sind.
- Es können übliche Produktionsanlagen, wie sie beispielsweise für Lithium-Ionen-Zellen vorhanden sind, benutzt werden.

Erforderlich ist, dass durch geeignete Maßnahmen sichergestellt wird, dass die Kurzschlüsse und die Reaktionen, die aus der mit den Kurzschlüssen resultierenden Erhitzung verbundenen sind, lokal begrenzt sind.

Um dies zu erreichen, ist vorzugsweise eine poröse Isolatorschicht vorgesehen, die so angeordnet und ausgebildet ist, dass während des Ladens der Zelle an der negativen Elektrode abgeschiedene aktive Masse durch die Poren der Isolatorschicht bis an die Oberfläche der positiven Elektrode hindurchwachsen kann. Die poröse Isolatorschicht steht bevorzugt in unmittelbarem Kontakt zu der positiven Elektrode, wobei sich deren Oberflächen vollflächig berühren.

Die Poren der Isolatorschicht müssen groß genug sein, dass sie das gewünschte Hindurchwachsen der aktiven Masse bis an die Oberfläche der positiven Elektrode zulassen. Zugleich muss die Struktur und die Anordnung relativ zu der positiven Elektrode so ausgebildet sein, dass der Kontakt zwischen aktiver Masse und positiver Elektrode auf lokale Teilbereiche der Elektrodenoberfläche beschränkt ist, so dass nur lokale Kurzschlüsse stattfinden, die keine Reaktion von weiterem Lithium (das sich in der porösen Isolatorschicht oder an anderen Teilen von deren Grenzfläche zu der negativen Elektrode befindet) nach sich ziehen. Würde ein lokaler Kurzschluß weitere Kurzschlüsse initiieren, so wäre durch die starke Temperaturerhöhung ein unkontrolliertes Abreagieren des Lithiums, d.h. ein "thermal runaway" zu erwarten.

Die im Einzelfall geeignete Struktur der porösen Isolatorschicht muss für die jeweilige Zellkonstruktion individuell festgelegt werden. Dabei ist zu berücksichtigen, dass der Durchmesser der beim Abscheiden des Lithiums gebildeten Whisker von Zelle zu Zelle verschieden ist. Besonders deutlich zeigt sich dies beim Vergleich von mit unterschiedlichen Elektrolyten arbeitenden Zellen. Bei Verwendung eines organischen Elektrolyten haben die Whisker generell erheblich größere Durchmesser als bei einem auf SO₂ basierenden Elektrolyten. Es kann deshalb durchaus sein, dass eine Schicht mit einer bestimmten Porosität bei einer ersten Zellkonstruktion das Hindurchwachsen von Whiskern verhindert und deswegen als Separator wirkt, während bei einer anderen Zelle die gleiche Schicht von der abgeschiedenen aktiven Masse durchdrungen wird.

Schon aus diesem Grund ist es praktisch unmöglich, Zahlenwerte oder andere quantitative Angaben über die Porengröße geeigneter Isolatorschichten zu machen. Hinzu kommt, dass übliche Angaben von Herstellern poröser Schichtmaterialien, wie beispielsweise "mittlere Porengröße" und "maximale Porengröße" im vorliegenden Fall zur Charakterisierung geeigneter Schichtmaterialien unbrauchbar sind, weil die Porengrößenverteilung von großer Bedeutung ist. Beispielsweise kann eine Schicht geeignet sein, die einen hohen Prozentsatz extrem feiner Poren hat, jedoch eine ausreichende Anzahl gröberer Poren aufweist, durch die die aktive Masse hindurchwachsen kann. Die Eignung eines Schichtmaterials zur Erfüllung der hier beschriebenen Funktion läßt sich jedoch experimentell problemlos prüfen, wie weiter unten noch näher beschrieben wird.

Die poröse Isolatorschicht kann beispielsweise als selbsttragende Folie, poröse Verbundstruktur aus Partikeln, Fasern oder Mikro-Rohrstücken mit einem Bindemittel oder auch als lose Schüttung ausgebildet sein. Es ist jedenfalls vorteilhaft, wenn die Schicht insgesamt gut benetzt wird, so dass die Elektrolytlösung leicht in die Schicht eindringt. Vorzugsweise enthält die poröse Isolatorschicht ein partikel-, faser- oder rohrförmiges Porenstrukturmaterial, das insbesondere aus Oxiden, Karbiden oder chemisch stabilen Silikaten gebildet sein kann. Als Bindemittel eignet sich besonders ein Terpolymer aus Tetrafluorethylen, Hexafluorpropylen und Vinyliden-Fluorid.

Die poröse Isolatorschicht muss nicht notwendigerweise eine gesonderte Schicht sein, die von anderen funktionalen Schichten der Zelle unterschieden werden kann. Dies gilt insbesondere für eine bevorzugte Ausführungsform der Erfindung, bei der die negative Elektrode ein flächiges, elektronisch leitendes Substrat, beispielsweise in Form eines Bleches, Schaums oder Gewebes aus Metall und eine mit dem Substrat verbundene nichtleitende Abscheideschicht aufweist, die derartig ausgebildet und angeordnet ist, dass an der Oberfläche des Substrats abgeschiedene aktive Masse in ihre Poren eindringt und dort weiter abgeschieden wird. Eine solche Konstruktion ist aus der WO 02/09213 bekannt, auf die insoweit Bezug genommen wird. Im Gegensatz zu der dort beschriebenen Zellkonstruktion ist erfindungsgemäß jedoch zwischen der Abscheideschicht und der positiven Elektrode keine für die aktive Masse undurchlässige Sperrschicht vorhanden. Die für die Lokalisierung der infolge des Fehlens der Sperrschicht unvermeidlich auftretenden Kurzschlüsse vorteilhafte poröse Isolatorschicht kann integraler (ununterscheidbarer) Bestandteil der Abscheideschicht sein oder durch eine gesonderte Schicht gebildet werden, die zwischen der Abscheideschicht und der positiven Elektrode verläuft und mit der Abscheideschicht lückenfrei und vollflächig verbunden sein sollte.

Generell hat sich die Erfindung insbesondere bei Zellkonstruktionen bewährt, bei denen die negative Elektrode so ausgebildet ist, dass beim Laden der Zelle positive Metallionen des Leitsalzes in ihrem Inneren aufgenommen werden. Bei derartigen Konstruktionen kommt es beim normalen Laden der Zelle zunächst nicht zu einer Abscheidung von aktivem Metall auf der Elektrodenoberfläche, sondern die Speicherung des aktiven Metalls während des Ladevorgangs findet im Inneren einer Struktur statt, die Bestandteil der negativen Elektrode ist. Zelltypen, für die diese Bedingung gilt, werden hier allgemein als "Insertionselektrode" bezeichnet. Als Insertionselektrode in diesem allgemeinen Sinne ist auch die vorstehend erläuterte Konstruktion mit einem flächigen, elektronisch leitendem Substrat und einer damit verbundenen Abscheideschicht, in deren Poren die aktive Masse beim Laden aufgenommen wird, anzusehen.

Gemäß einer weiteren Variante erfolgt die Aufnahme der positiven Metallionen in das Innere einer elektrisch leitfähigen Elektrodenmasse, die Bestandteil der negativen Elektrode ist. Ein wichtiges Beispiel einer solchen elektrisch leitfähigen Elektrodenmasse sind kohlenstoffhaltige Elektroden, insbesondere Graphitelektroden, wie sie auch für Lithium-Ionen-Zellen verwendet werden. Dabei erfolgt die Speicherung des Lithiums während des Ladens nicht durch Ablagerung in porösen Hohlräumen, sondern durch Einlagerung in die Gitterstruktur der elektrisch leitfähigen Elektrodenmasse. Neben der erwähnten Graphitelektroden können als Beispiele solcher Elektrodenmaterialien Lithiuminterkalationselektroden auf Basis von Li₄Ti₅O₁₂ oder Legierungselektroden genannt werden.

Bei derartigen Zellkonstruktionen muss zwingend eine gesonderte poröse Isolatorschicht vorhanden sein, um einen unmittelbaren elektrischen Kontakt und damit Kurzschluß zwischen der negativen und der positiven Elektrode (d.h. deren jeweils leitfähigen Elektrodenmassen) zu verhindern. Eine solche Gestaltung wird nachfolgend anhand der Figuren noch näher erläutert.

Die Erfindung wird nachfolgend anhand der Figuren näher erläutert. Die dargestellten und beschriebenen Besonderheiten können einzel oder in Kombination verwendet werden, um bevorzugte Ausgestaltungen der Erfindung zu schaffen. Es zeigen:
- Fig. 1: einen schematischen Querschnitt durch eine erfindungsgemäße Batteriezelle;
- Fig. 2: eine perspektivische Prinzipdarstellung zur Erläuterung der Anordnung und der Größenverhältnisse der Elektrodenmassen bei einer beispielhaften Ausführungsform der Erfindung;
- Fig. 3: eine perspektivische Prinzipdarstellung zur Erläuterung eines Verfahrens zur experimentellen Auswahl eines geeigneten Materials für eine poröse Isolatorschicht;
- Fig. 4: eine graphische Darstellung von Meßergebnissen aus der experimentellen Erprobung einer Ausführungsform der Erfindung;
- Fig. 5: und Fig. 6 zyklische Voltamogramme aus der experimentellen Erprobung der Erfindung;
- Fig. 7: eine zusammenfassende Darstellung von aufgrund von zyklischen Voltamogrammen gemäß den Figuren 5 und 6 gewonnenen Ergebnissen;
- Fig. 8: eine graphische Darstellung der Entladekapazität von Zellen in Abhängigkeit von der Zahl der Lade- und Entladezyklen;

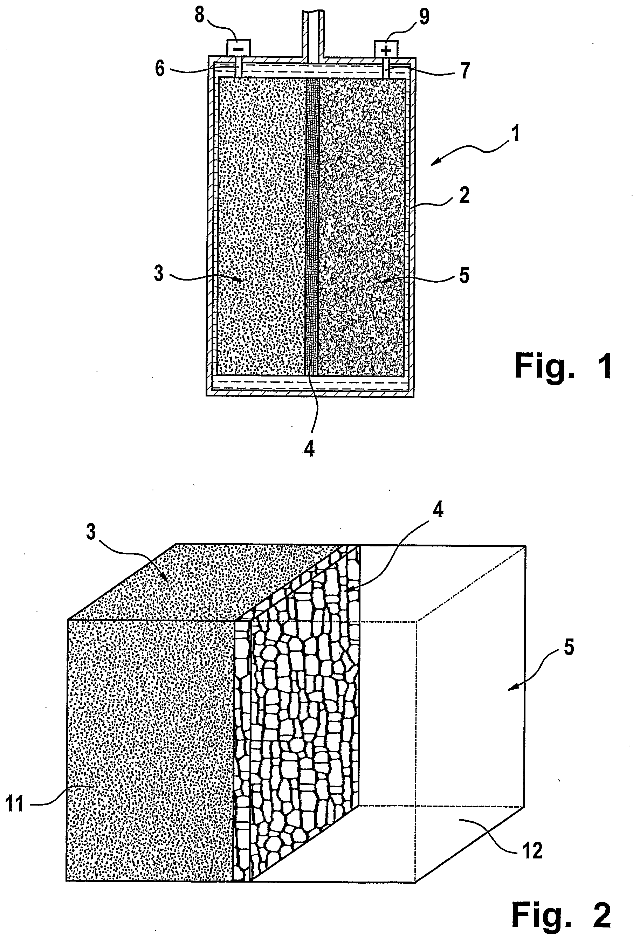

Figur 1 zeigt schematisch eine elektrochemische Batteriezelle 1 mit einem Gehäuse 2, in deren Innenraum sich eine Sandwich-Anordnung von Schichten befindet, nämlich eine negative Elektrode 3, eine poröse Isolationsschicht 4 und eine positive Elektrode 5. Die Elektroden 3,5 sind über elektrische Ableiter 6,7 mit Anschlußkontakten 8,9 verbunden, über die die Zelle zum Laden mit einem Ladegerät bzw. bei der Verwendung mit einem Stromverbraucher verbunden werden kann.

Die Konstruktion der Zelle ist weitgehend konventionell und muss nicht näher erläutert werden. Eine wichtige Besonderheit besteht darin, dass zwischen den Elektroden 3,5 kein Separator, sondern eine poröse Isolatorschicht 4 vorhanden ist, die das Durchwachsen von aktivem Metall, das beim Laden der Zelle an der der positiven Elektrode 5 zugewandten Oberfläche der negativen Elektrode abgeschieden wird, durch die Isolatorschicht 4 hindurch begünstigt. Dabei kommt es zu lokalen Kontakten zwischen dem aktiven Metall und der der negativen Elektrode 3 zugewandten Oberfläche der positiven Elektrode 5 und infolgedessen finden lokale Kurzschlüsse statt.

Figur 1 und noch deutlicher Figur 2 zeigen, dass die Elektroden 3,5 vorzugsweise sehr viel dicker als die Isolatorschicht 4 sind. Die Isolatorschicht 4 hat bevorzugt eine Dicke von maximal 100 µm, während die Elektroden eine Dicke von typischerweise etwa 0,1 mm bis 2 mm haben. Diese Zahlenwerte zeigen, dass die Darstellung in den Figuren zwar hinsichtlich der Dickenrelationen etwa maßstäblich ist, nicht jedoch hinsichtlich der absoluten Dicke der Schichten. Vielmehr enthält eine kommerzielle Batterie in der Regel ein Paket aus einer Mehrzahl dünner Schichten. Insoweit unterscheidet sich die Erfindung, abgesehen von den hier erläuterten Besonderheiten, nicht von üblichen Batterien.

Die relativ große Dicke der Elektroden 3 und 5 hängt damit zusammen, dass bei der dargestellten bevorzugten Ausführungsform beide Elektroden eine elektrisch leitfähige Elektrodenmasse 11 bzw. 12 aufweisen, in die die Ionen des aktiven Metalls beim Laden bzw. Entladen der Zelle aufgenommen werden. Geeignete Materialien wurden bereits genannt. Besonders bevorzugt ist die negative Elektrode 3 eine Graphitelektrode, wobei ihre (bevorzugt poröse) Elektrodenmasse 11 weitgehend aus Kohlenstoff besteht. Die positive Elektrode ist bevorzugt eine Interkalationselektrode, deren Elektrodenmasse 12 aus Lithiumkobaltoxid gebildet ist und bevorzugt ebenfalls eine poröse Struktur hat. Im entladenen Zustand ist das Lithium im Inneren der positiven Elektrode gespeichert. Beim Laden wandern Lithiumionen durch die poröse Isolatorschicht 4 in die Elektrodenmasse 11 der negativen Elektrode. Bei bestimmten Betriebszuständen findet, wie weiter oben erläutert, darüber hinaus eine Abscheidung des aktiven Metalls an der Grenzfläche zwischen der Elektrodenmasse 11 und der porösen Isolatorschicht 4 statt. Dabei dringt das aktive Metall in die Poren der Isolatorschicht 4 ein und wächst durch die poröse Isolatorschicht 4 hindurch schließlich bis an die Grenzfläche zwischen der positiven Elektrode 5 und der Isolatorschicht 4, wo die erläuterten lokalen Kurzschlüsse stattfinden.

In den Figuren 1 und 2 nicht dargestellt ist die erforderliche elektrische Verbindung zwischen den Elektrodenmassen 11,12 und den Ableitern 6,7. Sie wird durch metallene Ableitelemente gewährleistet, die in üblicher Weise mit den Elektrodenmassen 11,12 verbunden sein können. In Frage kommen beispielsweise dünne Ableitbleche auf der von dem porösen Isolator 4 abgewandten Oberfläche der Elektrodenmassen 11 und 12, aber auch poröse Metallstrukturen, beispielsweise in Form von Metallschäumen, in die die Elektrodenmasse partiell oder vollständig eingearbeitet ist. Auch insofern ist keine nähere Erläuterung erforderlich, weil derartige Konstruktionen aus dem Stand der Technik bekannt sind.

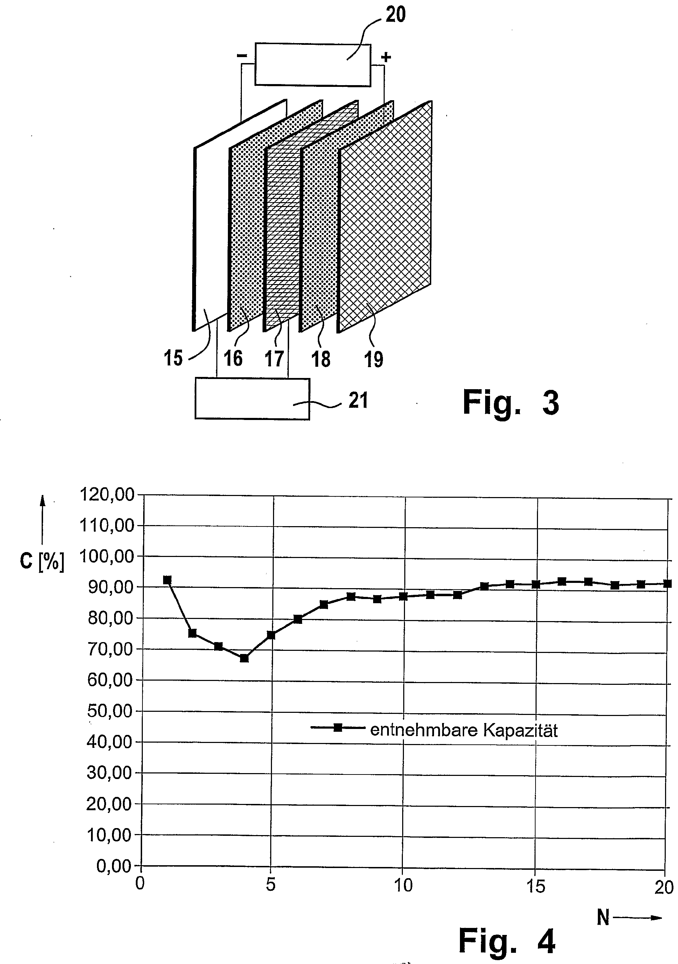

Wie weiter oben erläutert wurde, können die Konstruktionsmerkmale der porösen Isolatorschicht 4, durch die die im Rahmen der Erfindung erforderlichen Eigenschaften (Durchlässigkeit für an der negativen Elektrode abgeschiedene aktive Masse, aber Sicherstellung von lokal begrenzten Kurzschlüssen) erreicht werden, nicht in allgemein verbindlichen Werten (beispielsweise hinsichtlich der Porösität und der Strukturbestandteile) angegeben werden. Die Eignung eines für die Isolatorschicht vorgesehenen Materials für eine bestimmte Zelle läßt sich jedoch experimentell leicht prüfen. Ein geeigneter Experimentalaufbau ist in Figur 3 stark schematisiert dargestellt. Er besteht aus folgender Schichtenfolge:
Negative Elektrode 15 aus Ni-Metall; geeignet ist sowohl eine Metallfolie als auch ein Schaum- oder Streckmetall aus Nickel.

Testmaterial 16: auf seine Eignung für die Isolatorschicht 4 zu untersuchendes Material
Hilfselektrode 17 aus Ni-Metall; sie muss flüssigkeitsdurchlässig sein und kann beispielsweise aus Streckmetall oder perforiertem Blech bestehen.

Separator 18: Geeignet ist ein übliches Separatormaterial; in dem Experimentalaufbau kommt es nur auf dessen elektrisch isolierende Eigenschaften bei gleichzeitiger Durchlässigkeit für den Elektrolyt an.

Positive Elektrode 19: LiCoO₂ in Ni-Schaum

Die Schichten werden aufeinander gestapelt und mittels eines nicht dargestellten Rahmens zusammengepreßt. Der gesamte Aufbau wird in eine auf SO₂ basierende Elektrolytlösung getaucht, deren Zusammensetzung der Elektrolytlösung der geplanten Zelle entspricht.

Die dargestellte Experimentalzelle wird mittels eines Ladegerätes 20 geladen, wobei (wie zuvor für die Zelle der Figuren 1 und 2 beschrieben) Lithium aus der positiven Elektrode 19 ausgelagert wird und sich in der negativen Elektrode abscheidet. Während des Ladevorgangs wird die Potentialdifferenz zwischen der negativen Elektrode und der Hilfselektrode mittels eines Spannungsmeßgerätes 21 überwacht. Sie beträgt normalerweise 3,3 Volt (Spannung eines Li-Ni-Elementes). Wenn Lithium durch die Isolatorschicht 16 zu der Hilfselektrode 17 durchwächst, führt dies zu einer Verringerung der Potentialdifferenz. Zu diesem Zeitpunkt wird die Messung beendet und die Experimentalzelle auseinandergebaut. durch optische Untersuchung der Isolatorschicht (auf der der Hilfselektrode 17 zugewandten Seite) kann die Art des Lithiumwachstums festgestellt werden. Die Stellen, an denen das Lithium durchgewachsen ist, sowie die eventuellen Ansammlungen von Lithium, sind gut zu erkennen. Somit läßt sich feststellen, ob das Lithium wie gewünscht die zu untersuchende Schicht 16 nur an lokal begrenzten Stellen durchdringt und sich demzufolge als poröse Isolatorschicht für die Erfindung eignet.

Figur 4 zeigt Ergebnisse der experimentellen Erprobung einer erfindungsgemäßen separatorlosen Meßzelle. Im konkreten Fall hatte die Zelle eine positive Elektrode aus LiCoO₂ und eine negative Elektrode mit unmittelbarer Abscheidung von metallischem Lithium in eine poröse Struktur aus Siliciumcarbid, die in unmittelbarem Kontakt zu der Elektrodenmasse der positiven Elektrode stand. Als Elektrolyt wurde LiAlCl₄ x 1,5 SO₂ verwendet.

Aufgetragen ist die Kapazität C der Zelle in Prozent der Nennkapazität gegenüber der Zahl N der Lade- und Entladezyklen. Nach einem anfänglichen Kapazitätsverlust durch strukturelle Inhomogenitäten der negativen Elektrode stabilisierte sich die Kapazität auf 90 %. Dies zeigt die Funktionstüchtigkeit der separatorlosen Konstruktion.

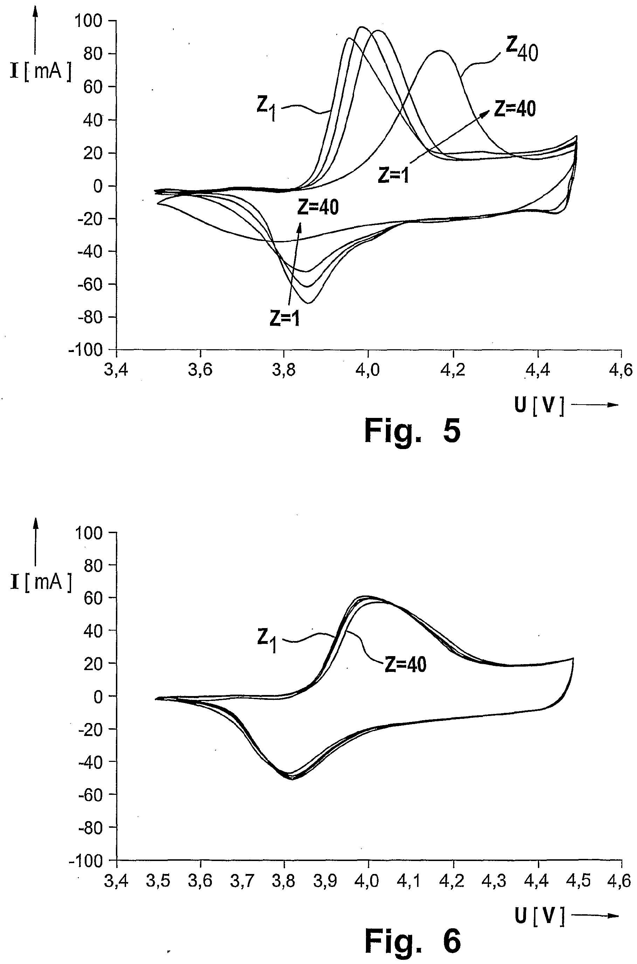

Die Figuren 5 bis 8 zeigen Ergebnisse, die bei der experimentellen Erprobung der Erfindung gewonnen wurden. Dabei wurden positive Elektroden, die erfindungsgemäß optimiert worden waren, mit nicht optimierten Elektroden verglichen. Der Versuchsaufbau hatte folgende Merkmale:
Geometrische Elektrodenfläche: 1 cm²
Elektrodenkapazität: 40 mAh
Elektrolytlösung: LiAlCl₄ x 1,5 SO₂
Elektrodenmaterial: LiCoO₂

In einer gebräuchlichen Experimentalzelle ("E-Zelle" mit Referenzelektrode zur stromlosen Messung des Potentials) wurden Zyklen durchgeführt, bei denen die Spannung zwischen 3,5 V und 4,5 V mit einer Durchlaufgeschwindigkeit von 0,2 mV/s geändert wurde. Die Figuren 5 und 6 zeigen zyklische Voltamogramme, die dabei einerseits mit einer nicht erfindungsgemäß optimierten Elektrode und andererseits mit einer erfindungsgemäß optimierten Elektrode gewonnen wurden. Aufgetragen ist die gemessene Stromstärke I in mA gegen die an die Zelle angelegte Spannung u in V gegen die Li/Li⁺-Halbzelle. Dargestellt sind jeweils vier Zyklen, darunter der erste Zyklus Z₁ und der letzte Zyklus Z₄₀.

Bei der Zelle mit der nicht erfindungsgemäß optimierten positiven Elektrode zeigt Figur 5 eine deutliche Veränderung des zyklischen Voltamogramms, die vor allem dadurch charakterisiert ist, dass sich die Position des aniodischen Peaks zu größeren Spannungen verschiebt. Während er bei dem ersten Zyklus noch deutlich unter 4 V liegt, liegt er bei dem vierzigsten Zyklus nahe bei 4,2 V. Dies entspricht einem Anstieg des Innenwiderstandes der Zelle, der nach der Erkenntnis der Erfinder auf die Passivierung der positiven Elektrode zurückzuführen ist.

Die in Figur 6 dargestellten Ergebnisse zeigen, dass die erfindungsgemäße Optimierung der Elektrode dazu führt, dass sich das zyklische Voltamogramm während vierzig Zyklen praktisch nicht ändert: Die elektrischen Werte der Zelle, insbesondere ihr Innenwiderstand, bleiben konstant.

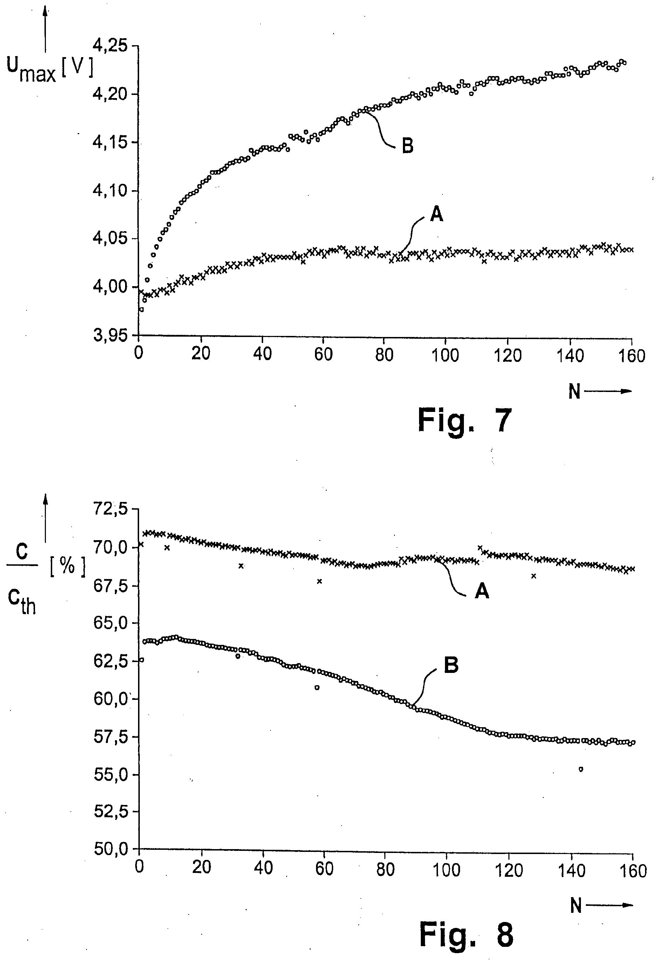

In Figur 7 sind diese Ergebnisse nochmals zusammenfassend dargestellt. Hier ist für Zellen mit erfindungsgemäß optimierter Elektrode (Kurve A) und für Zellen mit nicht optimierter Elektrode (Kurve B) die Änderung des Maximums des Peaks (Uₘₐₓ in Volt) gegen die Zahl der Zyklen dargestellt, wobei in diesem Fall mehr als 150 Zyklen durchgeführt wurden. Auch diese Darstellung zeigt, dass sich ohne die erfindungsgemäße Elektrodenoptimierung die Peaklage und damit der Innenwiderstand der Zelle stetig ändert, während sie bei Verwendung einer erfindungsgemäß optimierten Elektrode nahezu konstant bleibt.

Figur 8 zeigt für eine Zelle mit erfindungsgemäß optimierter Elektrode (Kurve A) und eine Zelle mit nicht optimierter Elektrode (Kurve B) die Abhängigkeit der elektrischen Entladekapazität (in % der theoretischen Kapazität von der Zahl N der Lade- und Entladezyklen). Auch diese Kenngröße wird durch die Erfindung wesentlich verbessert: Einerseits ist die Anfangskapazität um etwa 7% höher, andererseits ist die mit dem wiederholten Laden und Entladen der Zelle verbundene Kapazitätsabnahme wesentlich geringer.

## Patentansprüche

1. Verfahren zum Herstellen einer elektrochemischen Batteriezelle, die in einem Gehäuse eine positive Elektrode und eine negative Elektrode aufweist,
bei welchem
zur Optimierung einer Elektrode Hydroxid-Ionen von deren Oberfläche entfernt werden, wobei ein Reinigungsmittel, das eine mit Hydroxid-Ionen reagierende erste Reinigungskomponente enthält, derartig mit der Elektrode in Kontakt gebracht wird, dass an ihr gebundene Hydroxid-Ionen durch Reaktion mit der ersten Reinigungskomponente von der Elektrodenoberfläche gelöst werden, und
Bestandteile des Reinigungsmittels oder Reaktionsprodukte, die die Funktion der Zelle stören könnten, von der Elektrode entfernt werden.

2. Verfahren nach Anspruch 1, bei welchem die erste Reinigungskomponente eine protonenfreie Lewis-Säure ist.

3. Verfahren nach Anspruch 2, bei welchem die protonenfreie Lewis-Säure ausgewählt ist aus der Gruppe bestehend aus AlF₃, BF₃, CO₂, CS₂ und GaCl₃.

4. Verfahren nach einem der vorhergehenden Ansprüche, bei welchem die Elektrode eine Insertionselektrode, insbesondere eine Interkalationselektrode ist.

5. Verfahren nach Anspruch 4, bei welchem ein Reinigungsmittel, das eine mit H⁺-Ionen reagierende zweite Reinigungskomponente enthält, derartig mit der Insertionselektrode in Kontakt gebracht wird, dass in ihr gebundene H⁺-Ionen durch Reaktion mit der Komponente aus der Elektrode extrahiert werden.

6. Verfahren nach Anspruch 5, bei welchem die zweite Reinigungskomponente ein Salz ist, das mit H⁺-Ionen, die an der Insertionselektrode gebunden sind, eine Ionenaustauschreaktion eingeht.

7. Verfahren nach Anspruch 6, bei welchem das Salz ein Halogenid, insbesondere ein Fluorid eines Alkalimetalls, eines Erdalkalimetalls oder eines Elementes der dritten Hauptgruppe des Periodensystems, insbesondere LiCl oder LiF ist.

8. Elektrochemische Batteriezelle mit
einer negativen Elektrode, einem ein Leitsalz enthaltenden Elektrolyt und einer positiven Elektrode, wobei
der Elektrolyt auf SO₂ basiert,
enthaltend eine Insertionselektrode, insbesondere Interkalationselektrode, deren Oberfläche im wesentlichen frei von Hydroxid-Ionen ist und die höchstens 5000 ppm an chemisch gebundenem Wasser enthält.

9. Batteriezelle nach Anspruch 8, wobei die Insertionselektrode im wesentlichen frei von H⁺-Ionen ist.

10. Batteriezelle nach einem der Ansprüche 8 oder 9, wobei das Leitsalz des Elektrolyts ein Tetrahalogenoaluminat eines Alkalimetalls ist.

11. Batteriezelle nach einem der Ansprüche 8 bis 10, wobei die Insertionselektrode die positive Elektrode der Batteriezelle ist.

12. Batteriezelle nach einem der Ansprüche 8 bis 10, wobei die negative Elektrode eine elektrisch leitfähige Elektrodenmasse aufweist, in welche die Metallionen des Leitsalzes beim Laden der Zelle aufgenommen werden und eine poröse Isolatorschicht zwischen der elektrisch leitfähigen Elektrodenmasse der negativen Elektrode und der positiven Elektrode verläuft.

13. Batteriezelle nach Anspruch 12, wobei die elektrisch leitfähige Elektrodenmasse der negativen Elektrode Kohlenstoff enthält.

14. Batteriezelle nach einem der Ansprüche 8 bis 13, wobei der Zwischenraum zwischen der positiven Elektrode und der negativen Elektrode so ausgebildet ist, dass während des Ladens der Zelle an der negativen Elektrode abgeschiedene aktive Masse derartig in Kontakt zu der positiven Elektrode kommen kann, dass an deren Oberfläche lokal begrenzte Kurzschlußreaktionen stattfinden.

15. Batteriezelle nach Anspruch 14, wobei benachbart und parallel zu der positiven Elektrode eine poröse Isolatorschicht verläuft, die so angeordnet und ausgebildet ist, dass während des Ladens der Zelle an der negativen Elektrode abgeschiedene aktive Masse durch die Poren der Isolatorschicht bis an die Oberfläche der positiven Elektrode hindurchwachsen kann.

16. Batteriezelle nach Anspruch 15,
wobei
die negative Elektrode ein flächiges, elektronisch leitendes Substrat und eine mit dem Substrat verbundene nichtleitende Abscheideschicht aufweist, die derartig ausgebildet und angeordnet ist, dass an der Oberfläche des Substrats abgeschiedene aktive Masse in ihre Poren eindringt und dort weiter abgeschieden wird und
zwischen der Abscheideschicht und der positiven Elektrode keine für die aktive Masse undurchlässige Sperrschicht vorhanden ist, wobei die poröse Isolatorschicht von der Abscheideschicht gebildet wird oder eine gesonderte Schicht ist.

17. Batteriezelle nach Anspruch 16, wobei die poröse Isolatorschicht ein partikel-, faser- oder rohrförmiges Porenstrukturmaterial enthält.

18. Batteriezelle nach Anspruch 17, wobei das Porenstrukturmaterial ein Oxid, Carbid oder ein chemisch stabiles Silikat enthält.

19. Batteriezelle nach Anspruch 18, wobei die poröse Isolatorschicht ein Bindemittel auf Basis eines Terpolymers aus Tetrafluorethylen, Hexafluorpropylen und Vinyliden-Fluorid enthält.

20. Batteriezelle nach einem der Ansprüche 8 bis 19, mit einer Elektrode erhältlich mit einem Verfahren nach einem der Ansprüche 1 bis 7.

21. Verfahren nach einem der Ansprüche 1 bis 7 oder Batteriezelle nach einem der Ansprüche 8 bis 20, bei welchem das aktive Metall ausgewählt ist aus der Gruppe bestehend aus den Alkalimetallen, den Erdalkalimetallen und den Metallen der zweiten Nebengruppe des Periodensystems.

22. Verfahren nach einem der Ansprüche 1 bis 7 oder Batteriezelle nach einem der Ansprüche 8 bis 20, bei welchem das aktive Metall Lithium, Natrium, Calcium, Zink oder Aluminium ist.

23. Verfahren nach einem der Ansprüche 1 bis 7 oder Batteriezelle nach einem der Ansprüche 8 bis 20, bei welchem die positive Elektrode ein Metalloxid enthält.

24. Verfahren oder Batteriezelle nach Anspruch 23, bei welchem die positive Elektrode eine Interkalationsverbindung enthält.

25. Verfahren oder Batteriezelle nach Anspruch 24, bei welchem die positive Elektrode eine Interkalationsverbindung mit CoO₂ enthält.

## Claims

1. Method for manufacturing an electrochemical battery cell, which has a positive electrode and a negative electrode in a housing,
wherein
hydroxide ions are removed from the surface of an electrode for optimization thereof, wherein
a cleaning agent, which contains a first cleaning component reacting with hydroxide ions, is contacted with the electrode such that hydroxide ions bonded thereto are removed from the electrode surface due to a reaction with the first cleaning component, and
components of the cleaning agent or reaction products which may interfere with the function of the cell are removed from the electrode.

2. Method according to claim 1, wherein the first cleaning component is a proton-free Lewis acid.

3. Method according to claim 2, wherein the proton-free Lewis acid is selected from the group comprising AlF₃, BF₃, CO₂, CS₂ and GaCl₃.

4. Method according to any one of the preceding claims, wherein the electrode is an insertion electrode, preferably an intercalation electrode.

5. Method according to claim 4, wherein a cleaning agent which contains a second cleaning component reacting with H⁺ ions is contacted with the insertion electrode such that H⁺ ions bonded therein are extracted from the electrode due to a reaction with the component.

6. Method according to claim 5, wherein the second cleaning component is a salt which undergoes an ion exchange reaction with H⁺ ions which are bonded to the insertion electrode.

7. Method according to claim 6, wherein the salt is a halogenide, preferably a fluoride of an alkali metal, of an alkaline earth metal, or of an element of the third main group of the periodic system, in particular LiCl or LiF.

8. Electrochemical battery cell having
a negative electrode, an electrolyte containing a conductive salt, and a positive electrode,
wherein
the electrolyte is based on SO₂,
comprising an insertion electrode, preferably an intercalation electrode, the surface of which is essentially free of hydroxide ions and which contains at most 5000 ppm of chemically bound water.

9. Battery cell according to claim 8, wherein the insertion electrode is essentially free of H⁺ ions.

10. Battery cell according to one of the claims 8 or 9, wherein the conductive salt of the electrolyte is a tetrahalogenated aluminate of an alkali metal.

11. Battery cell according to one of the claims 8 to 10, wherein the insertion electrode is the positive electrode of the battery cell.

12. Battery cell according to one of the claims 8 to 10, wherein the negative electrode comprises an electrically conductive electrode mass into which the metal ions of the conductive salt are taken up during charging of the cell and a porous insulator layer is located between the electrically conductive electrode mass of the negative electrode and the positive electrode.

13. Battery cell according to claim 12, wherein the electrically conductive electrode mass of the negative electrode contains carbon.

14. Battery cell according to one of the claims 8 to 13, wherein the intermediate space between the positive electrode and the negative electrode is arranged such that active mass deposited on the negative electrode during charging of the cell may come into contact with the positive electrode in such a way that locally limited short-circuit reactions occur at its surface.

15. Battery cell according to claim 14, wherein a porous insulator layer runs adjacent and parallel to the positive electrode, which is arranged and formed such that it is possible for active mass deposited on the negative electrode to grow during the charging of the cell through the pores of the insulator layer up to the surface of the positive electrode.

16. Battery cell according to claim 15,
wherein
the negative electrode has a planar, electronically conductive substrate and a nonconductive deposition layer bonded to the substrate, the deposition layer being formed and arranged such that active mass deposited on the surface of the substrate penetrates into its pores and is deposited further therein and
no barrier layer impermeable to the active mass is located between the deposition layer and the positive electrode, the porous insulator layer being formed by the deposition layer or being a separate layer.

17. Battery cell according to claim 16, wherein the porous insulator layer contains a particle-shaped, fiber-shaped or tube-shaped pore structure material.

18. Battery cell according to claim 17, wherein the pore structure material contains an oxide, a carbide, or a chemically stable silicate.

19. Battery cell according to claim 18, wherein the porous insulator layer contains a binding agent based on a terpolymer of tetrafluoroethylene, hexafluoropropylene, and vinylidene fluoride.

20. Battery cell according to one of the claims 8 to 19 with an electrode obtainable by a method according to one of the claims 1 to 7.

21. Method according to one of the claims 1 to 7 or battery cell according to one of the claims 8 to 20, wherein the active metal is selected from the group comprising the alkali metals, the alkaline earth metals, and the metals of the second secondary group of the periodic system.

22. Method according to one of the claims 1 to 7 or battery cell according to one of the claims 8 to 20, wherein the active metal is lithium, sodium, calcium, zinc, or aluminium.

23. Method according to one of the claims 1 to 7 or battery cell according to one of the claims 8 to 20, wherein the positive electrode contains a metal oxide.

24. Method or battery cell according to claim 23, wherein the positive electrode contains an intercalation compound.

25. Method or battery cell according to claim 24, wherein the positive electrode contains an intercalation compound comprising CoO₂.

## Revendications

1. Procédé destiné à la fabrication d'un élément de batterie électrochimique, qui présente dans un boîtier une électrode positive et une électrode négative, dans lequel en vue de l'optimisation d'une électrode des ions hydroxyde sont écartés de la surface de celle-ci, dans lequel un agent de nettoyage qui contient un premier composant de nettoyage réagissant avec les ions hydroxyde est mis en contact avec l'électrode de telle sorte que des ions hydroxyde liés à l'électrode sont libérés par la surface d'électrode par le biais d'une réaction avec le premier composant de nettoyage, et des composants de l'agent de nettoyage ou des produits de réaction qui pourraient perturber le fonctionnement de l'élément sont écartés de l'électrode.

2. Procédé selon la revendication 1, dans lequel le premier composant de nettoyage est un acide de Lewis exempt de protons.

3. Procédé selon la revendication 2, dans lequel l'acide de Lewis exempt de protons est sélectionné dans le groupe constitué par les composants suivants AlF₃, BF₃, CO₂, CS₂ et GaCl₃.

4. Procédé selon l'une des revendications précédentes, dans lequel l'électrode est une électrode à insérer, en particulier une électrode à intercaler.

5. Procédé selon la revendication 4, dans lequel un agent de nettoyage qui contient un deuxième composant de nettoyage réagissant avec les ions H⁺ est mis en contact avec l'électrode à insérer de telle sorte que des ions H⁺ contenus dans l'électrode sont extraits de l'électrode par le biais d'une réaction avec le composant.

6. Procédé selon la revendication 5, dans lequel le deuxième composant de nettoyage est un sel qui est soumis à une réaction d'échange d'ions avec les ions H⁺ qui sont liés à l'électrode à insérer.

7. Procédé selon la revendication 6, dans lequel le sel est un halogénure, en particulier un fluorure d'un métal alcalin, d'un métal alcalinoterreux ou d'un élément du troisième groupe principal du tableau périodique, en particulier LiCl ou LiF.

8. Elément de batterie électrochimique avec une électrode négative, un électrolyte contenant un sel conducteur et une électrode positive, dans lequel l'électrolyte est à base de SO₂, contenant une électrode à insérer, en particulier une électrode à intercaler, dont la surface est pour l'essentiel exempte d'ions hydroxyde et qui contient tout au plus 5000 ppm d'eau liée chimiquement.

9. Elément de batterie selon la revendication 8, dans lequel l'électrode à insérer est pour l'essentiel exempte d'ions H⁺.

10. Elément de batterie selon l'une des revendications 8 ou 9, dans lequel le sel conducteur de l'électrolyte est un tétrahalogénoaluminate d'un métal alcalin.

11. Elément de batterie selon l'une des revendications 8 à 10, dans lequel l'électrode à insérer est l'électrode positive de l'élément de batterie.

12. Elément de batterie selon l'une des revendications 8 à 10, dans lequel l'électrode négative présente une masse d'électrode électriquement conductrice, dans laquelle les ions métalliques du sel conducteur sont reçus lors du chargement de l'élément et une couche isolante poreuse s'étend entre la masse d'électrode électriquement conductrice de l'électrode négative et l'électrode positive.

13. Elément de batterie selon la revendication 12, dans lequel la masse d'électrode électriquement conductrice de l'électrode négative contient du carbone.

14. Elément de batterie selon l'une des revendications 8 à 13, dans lequel l'espace intermédiaire entre l'électrode positive et l'électrode négative est configuré de sorte que pendant le chargement de l'élément au niveau de l'électrode négative une masse active déposée peut entrer en contact avec l'électrode positive de telle sorte qu'au niveau de la surface de celle-ci des réactions de court-circuit limitées localement se produisent.

15. Elément de batterie selon la revendication 14, dans lequel une couche isolante poreuse s'étend de manière adjacente et parallèle à l'électrode positive, laquelle couche isolante est disposée et configurée de sorte que pendant le chargement de l'élément au niveau de l'électrode négative une masse active déposée peut passer à travers les pores de la couche isolante jusqu'à la surface de l'électrode positive.

16. Elément de batterie selon la revendication 15, dans lequel l'électrode négative présente un substrat plat électroniquement conducteur et une couche de dépôt non conductrice liée au substrat, qui est configurée et disposée de telle sorte qu'au niveau de la surface du substrat une masse active déposée pénètre dans ses pores et y est de nouveau déposée et entre la couche de dépôt et l'électrode positive aucune couche barrière imperméable à la masse active n'est présente, dans lequel la couche isolante poreuse est formée par la couche de dépôt ou est une couche distincte.

17. Elément de batterie selon la revendication 16, dans lequel la couche isolante poreuse contient un matériau de structure poreuse de forme particulaire, fibreuse ou tubulaire.

18. Elément de batterie selon la revendication 17, dans lequel le matériau de structure poreuse contient un oxyde, un carbure ou un silicate chimiquement stable.

19. Elément de batterie selon la revendication 18, dans lequel la couche isolante poreuse contient un liant à base d'un terpolymère en tétrafluoroéthylène, hexafluoropropylène et fluorure de vinylidène.

20. Elément de batterie selon l'une des revendications 8 à 19, avec une électrode qui peut être obtenue avec un procédé selon l'une des revendications 1 à 7.

21. Procédé selon l'une des revendications 1 à 7 ou élément de batterie selon l'une des revendications 8 à 20, dans lequel le métal actif est sélectionné dans le groupe constitué par les métaux alcalins, les métaux alcalinoterreux et les métaux du deuxième sous-groupe du tableau périodique.

22. Procédé selon l'une des revendications 1 à 7 ou élément de batterie selon l'une des revendications 8 à 20, dans lequel le métal actif est le lithium, le sodium, le calcium, le zinc ou l'aluminium.

23. Procédé selon l'une des revendications 1 à 7 ou élément de batterie selon l'une des revendications 8 à 20, dans lequel l'électrode positive contient un oxyde métallique.

24. Procédé ou élément de batterie selon la revendication 23, dans lequel l'électrode positive contient un composé à intercaler.

25. Procédé ou élément de batterie selon la revendication 24, dans lequel l'électrode positive contient un composé à intercaler avec du CoO₂.
